# EUROPEAN PATENT APPLICATION

(11) **EP 4 327 650 A1**
(43) Date of publication of application: **28.02.2024**
(21) Application number: 23193245.0
(22) Date of filing: 24.08.2023
(51) Int. Cl.: A01G 9/02, A01G 27/00, A01G 31/02, A01G 31/06

(54) **IMPROVED SIPHON**

(30) Priority: 26.08.2022 GB 202212413
(71) Applicant: Intelligent Growth Solutions Limited, Fife KY16 9DR (GB)
(72) Inventor: Skinner, Niall, Edinburgh, EH3 8BL (GB); Goddard, Juliette, Edinburgh, EH3 8BL (GB)
(74) Representative: HGF

(57) **Abstract**

There is provided a siphon (100, 200) for use in a growth tray (232) comprising at least one inlet, an outlet (108, 208) and a cavity (106, 206) located between the at least one inlet and the outlet (108, 208), the at least one inlet being in fluid communication with the outlet (108, 208) such that during use fluid may flow from the at least one inlet to the outlet (108, 208) via the cavity (106, 206), wherein the cavity (106, 206) is configured to retain air within the cavity (106, 206) until liquid is induced to displace it such that liquid surrounding the siphon (100, 200) is drained through the outlet (108, 208) via the cavity (106, 206) and the at least one inlet.

## Description

### Field

The present disclosure is directed to siphons, specifically to siphons and actuated siphons suitable for draining growth trays in a vertical growth tower as required.

### Background

Modern horticulture includes alternative methods of growing plants other than the traditional methods of growing plants in the ground. For example, the growth of population centres such as cities has increased the pressure on food supplies and alternative methods of growing plants have been used to increase the volume of crops that can be grown.

One example of these alternative methods include the use of vertical farms where stacks of growth trays are used to allow multiple layers of crops may be grown in a given area to thereby increase the quantity of plants produced for a given space. Growth trays used in vertical towers are required to allow the plant growing within them to be watered, provided by nutrients and illuminated with suitable light. The growth trays used in vertical farms often include a drain to allow excess water used to water the plants growing in the growth tray to be drained from the growth tray.

However, it is desirable to be able to control the timing of the draining of the growth tray so that the water is retained within the growth tray for a period long enough to allow the plants to take up as much water as is necessary for efficient growth, but not so long that detrimental effects to overexposure to water do not happen.

Furthermore, the water provided to the plants growing in the growth tray may also be used to deliver nutrients to the plants. Accordingly, any water retained within the growth tray may need to be refreshed periodically to ensure that the supply of nutrients to the plants is not depleted.

Yet further, growth trays retaining water within them are significantly heavier than when empty and it may be necessary to drain the trays to allow a lift mechanism to more readily remove and move the growth tray to a remote location.

Accordingly, there remains a need for improved ways of draining a growth tray in a controlled manner.

At least some aspects of the present disclosure are aimed to provide improved devices used to drain growth trays and methods of using the same.

### Summary

According to a first aspect there is provided a siphon for use in a growth tray, the siphon comprising at least one inlet, at least one outlet and an cavity located between the at least one inlet and the at least one outlet, the at least one inlet being in fluid communication with the at least one outlet such that during use fluid may flow from the at least one inlet to the at least one outlet via the cavity, wherein the cavity is configured to retain air within the cavity until liquid is induced to displace it such that liquid surrounding the siphon is drained through the at least one outlet via the cavity and the at least one inlet.

Typically during use the siphon may be installed in a growth tray outlet or drain and the drainage of the growth tray can be triggered by purposefully flooding the growth tray so that the level of the water in the growth tray is higher than the outlet of the siphon so that water flow evacuates the air in the cavity to thereby trigger flow of water from the growth tray through the at least one inlet to the drain via the cavity and at least one outlet of the siphon.

Accordingly, the siphon of the present aspect can be triggered to drain the growth tray by a user either directly or remotely.

It will be appreciated by the skilled person that the action of siphoning in the context of the present disclosure is the flow of fluid through a conduit that allows fluid to flow from a first level to a second level via a higher intermediate level where the second level is lower than the first level. Accordingly, as used herein the term "siphoning" is used to refer to the flow of liquid from at least one inlet to the at least one outlet via the cavity.

The presence of air in the cavity of the siphon may prevent the flow of fluid from the at least one inlet to the at least one outlet, thereby preventing siphoning of fluid by the siphon.

During use, when the air in the cavity has been displaced or evacuated liquid is drawn through the at least one inlet due to a drop in pressure within the siphon that is thereby created. Accordingly, any liquid within a growth tray within which the siphon is installed is drawn through the siphon and out the outlet of the siphon.

The siphon may include a body comprising a first end and an opposed second end, the at least one outlet being located at the first end and the cavity being located adjacent to the opposed second end.

The at least one inlet may be provided adjacent to the at least one outlet. The body may comprise an at least one inlet channel that extends from the or each at least one inlet to the cavity and an at least one outlet channel that extends from the cavity to the at least one outlet.

The at least one outlet channel may be configured to promote efficient drainage of water through the siphon. The at least one outlet channel may comprise at least a first portion having an inner diameter that is smaller than the majority of the at least one outlet channel. The provision of a first portion having a reduced or restricted inner diameter may restrict flow of fluid through the at least one outlet channel and may enable efficient removal of air from the cavity during actuation of the siphon.

The at least one outlet channel may comprise a second portion having an inner diameter that is smaller than the majority of the at least one outlet channel. The at least one outlet channel may comprise an intermediate portion located between the first portion and the second portion. The intermediate portion may have an inner diameter that is greater than the inner diameter of the first portion and the second portion. The provision of a first portion and a second portion with an intermediate portion may further enable efficient removal of air from the cavity during actuation of the siphon.

In some embodiments the siphon may comprise a plurality of inlets. The siphon may comprise two inlets. The siphon may comprise three inlets. The siphon may comprise four inlets. The siphon may comprise five inlets.

The siphon may comprise a central axis. The at least one outlet may be provided on the central axis. The cavity may be provided on the central axis.

In embodiments where the siphon includes a body, the plurality of inlets may be arranged symmetrically around the body. The plurality of inlets may be arranged symmetrically around the central axis.

The siphon may further comprise an actuator configured to displace the air within the cavity. The actuator may be configured to displace the air within the cavity by pushing the air out of the cavity with water. The actuator may be configured to displace the air within the cavity by drawing the air out of the cavity by connecting the cavity to a low pressure source.

The actuator may comprise a pump. The pump may pump water into the cavity of the siphon to thereby displace the air within the cavity. The pump may pump the air out of the cavity.

The actuator may comprise an actuator port in fluid communication with the cavity configured to allow fluid to flow into or out of the cavity via the actuator. In embodiments where the actuator comprises a pump, the pump may pump water into the cavity via the actuator port. The pump may pump the air out of the cavity via the actuator port.

The siphon may comprise a valve configured to allow water to enter the cavity from the actuator port. The valve may prevent air or water flowing from the cavity through the actuator port. Accordingly, the valve may a one-way valve.

The actuator may be configured to remove the air from the cavity. The actuator may generate or connect to a low pressure source to thereby draw air out of the cavity.

The actuator may be configured to inject liquid into the cavity to thereby displace the air retained within the cavity to induce flow of liquid from exterior of the siphon through the at least one outlet via the at least one inlet. The actuator may be configured to inject liquid into the cavity via the actuator port.

The actuator may be configured to remove the air from the cavity through the actuator port.

The siphon may comprise a receiver configured to receive a signal to trigger actuation of the siphon. The receiver may be a wireless receiver configured to receive a signal over a wireless network. Accordingly, the siphon may be actuated remotely without requiring a wired connection.

In embodiments where the siphon comprises a wireless receiver, growth trays within which the siphon is installed may be more readily moved without requiring the formation and breaking of electrical connections required for wired receivers, or without requiring lengths of wire extending from the receiver that can be potentially pulled or tangled or broken during the movement of the growth tray.

In a second aspect there is provided a growth tray for use in a vertical growth tower, the growth tray comprising a drain outlet and a siphon according to the first aspect connected to the drain outlet such that the at least one outlet of the siphon extends into the drain outlet of the growth tray, wherein during use the siphon may be actuated to drain liquid retained within the growth tray through the drain outlet of the growth tray.

The siphon may comprise an actuator connected to a pump and the pump may be retained within the growth tray.

The pump may be configured to pump liquid retained within the growth tray into the cavity of the siphon to thereby actuate the siphon to drain the liquid from growth tray through the liquid outlet. The pump may be configured to pump liquid retained within the growth tray into the cavity of the siphon to thereby displace or evacuate the air retained within the cavity through the at least one outlet to thereby actuate the siphon to drain the liquid from growth tray through the liquid outlet.

In some embodiments the growth tray may further comprise a drain in fluid communication with the liquid outlet.

The growth tray may comprise a floor surrounded by a wall. The floor may be level. The floor may be sloped. The floor may be sloped such that the drain outlet is provided at the lowest portion of the floor. Accordingly, liquid retained within the growth tray may flow towards the drain outlet.

The at least one inlet of the siphon may be provided adjacent to the bottom of the floor of the growth tray. The growth tray may comprise a recessed portion around the drain outlet such that the at least one inlet of the siphon is positioned at or below the level of the floor of the growth tray.

The growth tray may comprise a drain conduit that receives liquid that passes through the drain outlet. The drain conduit may extend from the drain outlet to a reservoir or container. Liquid drained from the growth tray may flow from the drain outlet along the drain conduit to the reservoir or container.

During use the siphon may be configured to drain all or substantially all of the water that is retained within the growth tray.

According to a third aspect there is provided a vertical farm comprising a plurality of growth trays according to the second aspect.

For the avoidance of doubt, features of the siphon of the first aspect are features of the siphon in the growth tray of the second aspect and the siphon in the plurality of growth trays of the third aspect.

### Brief Description of the Figures

Embodiments of the present invention will now be described, by way of non-limiting example, with reference to the accompanying drawings.
Figure 1: A side view of a siphon according to an embodiment;
Figure 2: A cross-section side view of a siphon according to an embodiment along the line A-A;
Figure 3: A side view of a siphon according to an embodiment;
Figure 4: A top view of a siphon according to an embodiment;
Figure 5: A cross-section side view of a siphon according to an embodiment along the line B-B shown in Figure 4;
Figure 6: A schematic side view of a growth tray including a siphon according to an embodiment; and
Figure 7: A photograph of a siphon installed in a growth tray according to an embodiment.

### Detailed Description

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

### Example 1

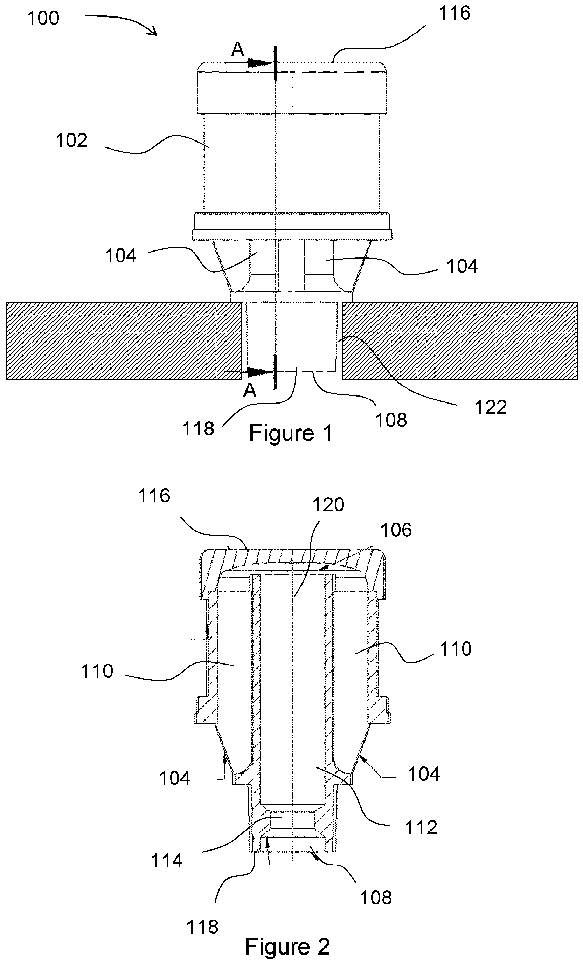

With reference to Figures 1 and 2 there is provided a siphon 100 comprising a body 102, four inlets 104, a cavity 106, and an outlet 108. The four inlets 104 are each independently connected to the cavity 106 by a separate inlet channel 110. The cavity 106 is connected to the outlet by an outlet channel 112. The outlet channel 112 comprises a restricted portion 114 adjacent to the outlet 108 where the internal diameter of the outlet channel 112 is reduced in the restricted portion 114 and is greater at the outlet 108. The cavity 106 is provided at a first end 116 of the body 102 of the siphon 100 and the outlet is provided at a second opposed end 118 of the body 102 of the siphon 100.

The siphon 100 comprises a central axis 120. The outlet 108 and cavity 106 are provided on the central axis 120 and the four inlets 104 are arranged symmetrically around the central axis 120. The siphon 100 is configured to be inserted into an drain outlet 122 of a growth tray such that at least a portion of the body 102 adjacent to the outlet 108 is inserted into the drain outlet 122.

The siphon 100 retains at least a pocket of air in the cavity 106 of the siphon. The pocket of air acts to prevent siphoning of water from the four inlets 104 to the outlet 108.

During use, the growth tray retains an aqueous nutrient solution that provides the plants that are grown in the growth tray with the nutrition and water that they need to grow. The growth trays are retained and stored in stacks in a vertical growth tower. When the growth tray needs to be serviced a lift is used to remove the growth tray and move it to a service area. In order to allow the growth tray to be more readily moved, the water retained within the growth tray should be drained to reduce the weight and to make handling of the growth tray to be easier.

When the growth tray is to be moved, the level of the aqueous nutrient solution in the growth tray is raised above the height of the cavity. As the level of the aqueous nutrient solution raises above the height of the cavity 106 the air pocket is drawn out of the cavity 106 thereby activating the flow of the aqueous nutrient solution through the siphon out of the outlet 108 through the drain outlet 122. Accordingly, the aqueous nutrient solution is thereby drained from the growth tray via the siphon 100.

### Example 2

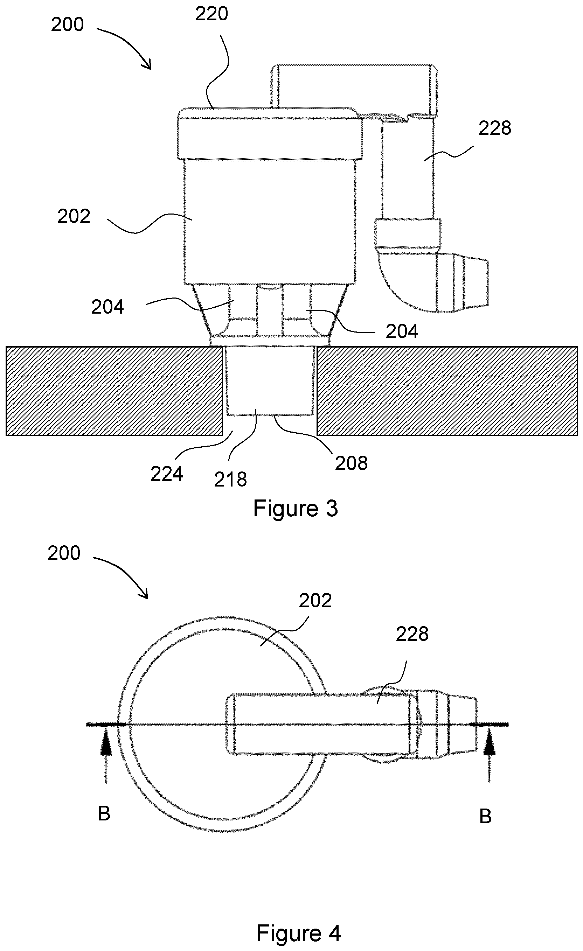

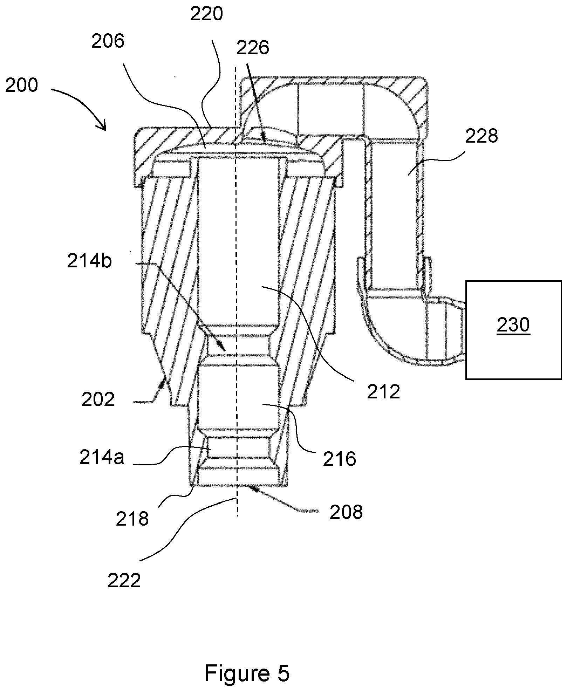

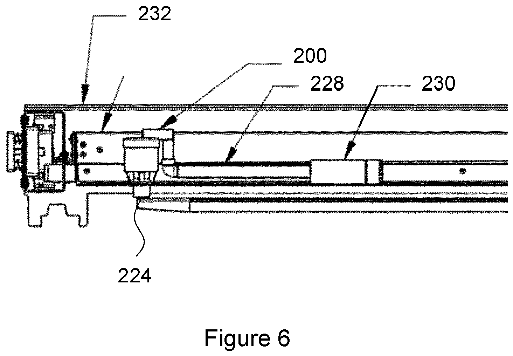

With reference to Figures 3 to 7 there is provided a siphon 200 comprising a body 202, four inlets 204, a cavity 206, and an outlet 208. The four inlets 204 are each independently connected to the cavity 206 by a separate inlet channel (not shown). The cavity 206 is connected to the outlet by an outlet channel 212. The outlet channel 212 comprises a first restricted portion 214a adjacent to the outlet 208 and a second restricted portion 214b with an intermediate portion 216 provided between the first restricted portion 214a and the second restricted portion 214b where the internal diameter of the outlet channel 212 is reduced in the first restricted portion 214a and the second restricted portion 214b and is greater at the outlet 208 and the intermediate portion 216. The cavity 206 is provided at a first end 218 of the body 202 of the siphon 200 and the outlet is provided at a second opposed end 220 of the body 202 of the siphon 200.

The siphon 200 comprises a central axis 222. The outlet 208 and cavity 206 are provided on the central axis 222 and the four inlets 204 are arranged symmetrically around the central axis 222. The siphon 200 is configured to be inserted into an drain outlet 224 of a growth tray 232 such that at least a portion of the body 202 adjacent to the outlet 208 is inserted into the drain outlet 224.

The siphon 200 further comprises an actuator port 226 connected to the cavity 206 and an actuator conduit 228 connects the actuator port 226 to a pump 230.

The siphon 200 retains at least a pocket of air in the cavity 206 of the siphon 200. The pocket of air acts to prevent siphoning of water from the four inlets 204 to the outlet 208.

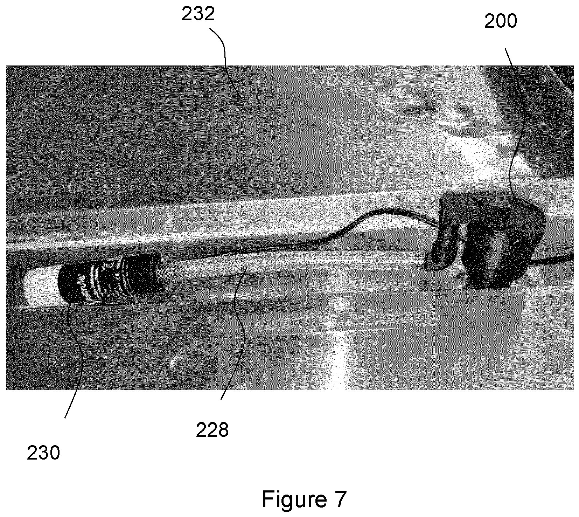

During use, the growth tray 232 (shown in Figure 7 empty) retains an aqueous nutrient solution that provides the plants that are grown in the growth tray 232 with the nutrition and water that they need to grow. The growth trays 232 are retained and stored in stacks in a vertical growth tower. When the growth tray 232 needs to be serviced a lift is used to remove the growth tray 232 and move it to a service area. In order to allow the growth tray 232 to be more readily moved, the water retained within the growth tray 232 should be drained to reduce the weight and to make handling of the growth tray 232 to be easier.

When the growth tray 232 is to be moved, the pump 230 is actuated. Aqueous nutrient solution is pumped along the actuator conduit 228 from the pump 230 and into the cavity 206 via the actuator port 226 to thereby flush the cavity 206, displacing the air pocket from the cavity 206. Once the air pocket has been displaced the siphon 200 is activated to thereby drain the growth tray 232 through the drain outlet 224 of the growth tray 232.

Accordingly, the growth tray 232 can be drained without requiring the growth tray 232 to be flooded before the siphon 200 is activated. As a result, the siphon 200 reduces the volume of aqueous nutrient solution that is used, thereby saving costs and being more environmentally friendly.

For example, a full growth tray 232 may retain 170 L of water. The pump 230 is turned on and water is pumped into the cavity 206 for less than a minute. The siphon 200 has thereby been activated and drains the growth tray 232 until the growth tray 232 is empty in approximately 30 minutes.

While there has been hereinbefore described approved embodiments of the present invention, it will be readily apparent that many and various changes and modifications in form, design, structure and arrangement of parts may be made for other embodiments without departing from the invention and it will be understood that all such changes and modifications are contemplated as embodiments as a part of the present invention as defined in the appended claims.

## Claims

1. A siphon for use in a growth tray, the siphon comprising at least one inlet, at least one outlet, a cavity located between the at least one inlet and the at least one outlet and an actuator, the at least one inlet being in fluid communication with the at least one outlet such that during use fluid may flow from the at least one inlet to the at least one outlet via the cavity, wherein the cavity is configured to retain air within the cavity until liquid is induced to displace it such that liquid surrounding the siphon is drained through the at least one outlet via the cavity and the at least one inlet, wherein the actuator is configured to displace air within the cavity.

2. The siphon of claim 1 further comprising a body comprising a first end and an opposed second end, the at least one outlet being located at the first end and the cavity being located adjacent to the opposed second end.

3. The siphon of claim 1 or claim 2, wherein the at least one inlet is provided adjacent to the at least one outlet and the body comprises an at least one inlet channel that extends from the or each at least one inlet to the cavity and an at least one outlet channel that extends from the cavity to the at least one outlet.

4. The siphon of any preceding claim, wherein the siphon comprises a plurality of inlets.

5. The siphon of claim 4 when dependent on claim 2, wherein the plurality of inlets are arranged symmetrically around the body.

6. The siphon of any preceding claim, wherein the actuator comprises a pump.

7. The siphon of any preceding claim, wherein the actuator comprises an actuator port in fluid communication with the cavity configured to allow fluid to flow into or out of the cavity via the actuator.

8. The siphon of claim 7, wherein the actuator is configured to remove the air from the cavity.

9. The siphon of claim 8, wherein the actuator is configured to inject or pump liquid into the cavity to thereby displace the air retained within the cavity to thereby induce flow of liquid from exterior of the siphon through the at least one outlet via the at least one inlet.

10. The siphon of claim 8, wherein the actuator is configured to remove the air from the cavity through the actuator port.

11. A growth tray for use in a vertical growth tower, the growth tray comprising a liquid outlet and a siphon according to any preceding claim connected to the liquid outlet such that the at least one outlet of the siphon extends into the liquid outlet of the growth tray, wherein during use the siphon may be actuated to drain liquid retained within the growth tray through the liquid outlet of the growth tray.

12. The growth tray of claim 11, wherein the siphon comprises an actuator connected to a pump and the pump is retained within the growth tray, optionally wherein the pump is configured to pump liquid retained within the growth tray into the cavity of the siphon to thereby actuate the siphon to drain the liquid from growth tray through the liquid outlet.

13. The growth tray of any of claims 11 to 12 further comprising a drain in fluid communication with the liquid outlet.

14. The growth tray of any of claims 11 to 13, wherein during use the siphon is configured to drain substantially all of the water from the growth tray.

15. A vertical farm comprising a plurality of growth trays according to any of claims 11 to 14.
